# EUROPÄISCHE PATENTSCHRIFT

(11) **EP 1 251 142 B1**
(45) Veröffentlichungstag und Bekanntmachung des Hinweises auf die Patenterteilung: **19.03.2008**
(21) Anmeldenummer: 02008535.3
(22) Anmeldetag: 16.04.2002
(51) Int. Cl.: C08F 220/58, C08F 226/06, A61K 9/00

(54) **Verwendung von Copolymerisaten auf Basis von Acrylamidoalkylsulfonsäuren als Verdicker in Zubereitungen enthaltend organische Lösemittel**
Use of copolymers based on acrylamidoalkylenesulphonic acid as thickener in compositions containing an organic solvent
Usage de copolymères à base d'acides acrylamidoalkylènesulfonique comme agent d'épaississement dans des compositions contenant un solvant organique

(30) Priorität: 20.04.2001 DE 10119338
(43) Veröffentlichungstag der Anmeldung: 23.10.2002
(73) Patentinhaber: Clariant Produkte (Deutschland) GmbH, 65929 Frankfurt am Main (DE)
(72) Erfinder: Löffler, Matthias, Dr., 65527 Niedernhausen (DE); Morschhäuser, Roman, Dr., 55122 Mainz (DE); Klug, Peter, Dr., 63762 Grossostheim (DE)

(56) Entgegenhaltungen:
- EP-A- 1 033 378
- EP-A- 1 116 733

## Beschreibung

Aus EP 1 033 378 sind bereits Copolymere bekannt, die Acrylamidoalkylsulfonsäure, offenkettige N-Vinylamide sowie ringförmige N-Vinylamide als Struktureinheiten enthalten. Diese Copolymere eignen sich als Bohrspülungen bei Tiefenbohrungen.

Die vorliegende Erfindung betrifft die Verwendung wasserlöslicher oder wasserquellbarer Copolymerisate auf Basis von Acrylamidoalkylsulfonsäuren und cyclischen N-Vinylcarbonsäureamiden bzw. cyclischen und linearen N-Vinylcarbonsäureamiden als Verdicker in Zubereitungen enthaltend organische Lösemittel.

Wasserhaltige oder lösemittelhaltige Mehrkomponentensysteme wie Lösungen, Emulsionen oder Suspensionen werden häufig aus ökonomischen, anwendungstechnischen Gründen oder der Stabilität wegen auf höhere Viskositäten eingestellt bzw. verdickt. So kann z.B. durch Erhöhung der Viskosität der externen oder internen Phase von Emulsionen oder Suspensionen erreicht werden, dass die Zeit bis zur Entmischung der Komponenten deutlich verlängert wird, was eine erhöhte Lagerzeit bedeutet. Durch Erhöhung der Viskosität wird bei vielen Produkten auch deren gleichmäßige Verteilbarkeit, insbesondere auf unebenen Flächen, verbessert. Dies gilt insbesondere für Haarpflegemittel, Hautpflegemittel und pharmazeutische Salben auf der Haut. Bei vielen technischen Produkten, wie z.B. Tapetenablösern, Abbeizmitteln oder Flugzeugenteisern, verhindert die erhöhte Viskosität ein vorzeitiges Abfließen von der zu behandelnden Fläche. Durch die gleichmäßigere Verteilung und verlängerte Einwirkdauer wird die Wirksamkeit erhöht. Neben den erwähnten anwendungstechnischen Vorteilen bietet die hohe Viskosität solcher Präparate auch Vorteile bei der Herstellung, Verpackung, Abfüllung und Lagerung, sowie beim Transport. Insbesondere ist hier aus sicherheitstechnischer Sicht die Verdickung saurer Medien von Bedeutung.
Generell sind die rheologischen Eigenschaften bei der Herstellung bzw. Formulierung kosmetischer, pharmazeutischer oder technischer Präparate ein entscheidendes Kriterium für den Einsatz dieser Produkte in der Praxis. Die eingesetzten Verdicker sollen dabei bereits in möglichst geringen Einsatzmengen und in einem weiten pH-Bereich zu einer ausreichenden Verdickung führen.
Dabei sollen die prinzipiellen Eigenschaften der Produkte, z.B. auch deren Farbe, nicht verändert werden.
Zur Einstellung der rheologischen Eigenschaften von wässrigen oder lösemittelhaltigen Systemen werden in der Fachliteratur zahlreiche Verdickersysteme vorgeschlagen.
Bekannte Verdicker sind z.B. Polymere auf Basis von Polyacrylsäure, z.B. ^{®}Carbopole, Carbomere, Ammonium Polyacrylate oder Sodium Acrylates Copolymere. Weiterhin geeignet sind Celluloseether, Cellulosederivate (z.B. Carboxymethylcellulose, Hydroxyethylcellulose), Gelatine, Stärke und Stärkederivate, Natriumalginate, Fettsäurepolyethylenglykolester, Agar-Agar, Traganth oder Dextrine. Ebenfalls geeignet sind Polyvinylalkohole, Polyacrylamide, Polyvinylpyrrolidon, Polyvinylmethylether, Polyethylenoxide, Copolymere aus Maleinsäureanhydrid und Vinylmethylether, sowie deren Mischungen.
Auch verwendet werden langkettige Polyether zusammen mit Fettsäureestern, z.B. Polyethylenglykol 6000 Distearat, Polyethylenglycol-polypropylenglycol-monoether, sowie Umsetzungsprodukte von Polyalkoholen mit Fettsäuren, z.B. Pentaerythritfettsäureester.

Die im Stand der Technik genannten Verdicker sind jedoch nicht frei von Nachteilen. So besitzen z.B. die Verdicker auf Basis von Polyacrylsäure im stark sauren pH-Bereich und bei Mitteln mit hohem Gehalt an organischen Lösemitteln nur ein unzureichendes Verdickungsvermögen. Ferner sind die entsprechenden Gele/Formulierung empfindlich gegenüber UV-Strahlung und Scherung und vermitteln zudem auf der Haut ein klebriges Gefühl.
Cellulosederivate sind sehr anfällig gegen Bakterien. Ebenfalls unerwünscht ist die Bildung "fadenziehender" Gele.
Fettsäurepolyethylenglykolester neigen in Gegenwart von Wasser zur Hydrolyse. Die dabei entstehenden unlöslichen Fettsäuren verursachen unerwünschte Trübungen. Verdickungsmittel natürlichen Ursprungs (z.B. Agar-Agar oder Traganth) weisen je nach Herkunft stark schwankende Zusammensetzung auf.
Überraschenderweise wurde nun gefunden, dass Copolymerisate auf Basis von Acrylamidoalkylsulfonsäuren und cyclischen N-Vinylcarbonsäureamiden bzw. cyclischen und linearen N-Vinylcarbonsäureamiden hervorragend als Verdicker für Zubereitungen enthaltend organische Lösemittel geeignet sind.
Gegenstand der Erfindung ist daher die Verwendung von Copolymeren, bestehend im Wesentlichen aus
a1) 1 bis 50 Gew.-% der wiederkehrenden Struktureinheit der Formel (1) 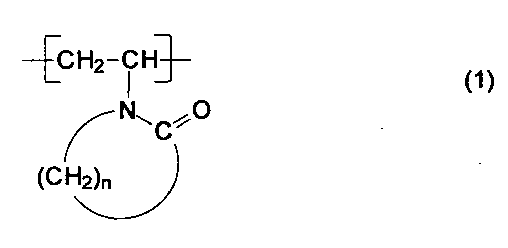 wobei n eine ganze Zahl von 2 bis 9 bedeutet
   oder
a2) 1 bis 50 Gew.-% einer Mischung der wiederkehrenden Struktureinheit der Formel (1) und der wiederkehrenden Struktureinheit der Formel (2) 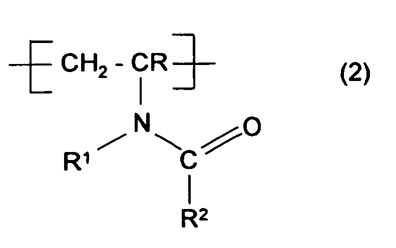 wobei R, R¹ und R² gleich oder verschieden sein können und Wasserstoff oder eine lineare oder verzweigte Alkyl- oder Alkenylgruppe mit jeweils 1 bis 30 C-Atomen, bevorzugt 1 bis 20 C-Atomen, insbesondere bevorzugt 1 bis 12 C-Atomen, bedeuten und
b) 49,99 bis 98,99 Gew.-% der wiederkehrenden Struktureinheit der Formel (3) 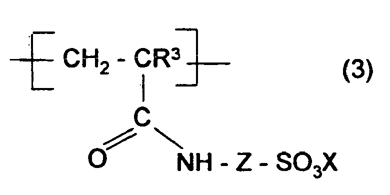 worin R³ Wasserstoff, Methyl oder Ethyl, Z (C₁-C₈)-Alkylen und X ein Ammonium-, Alkali- oder Erdalkali-Ion bedeuten und
c) 0,01 bis 8 Gew.-% vernetzenden Strukturen, die aus Monomeren mit mindestens zwei olefinischen Doppelbindungen hervorgegangen sind,
   als Verdicker in Zubereitungen enthaltend 5 bis 99,9 Gew.-% wassermischbare polar aprotische Lösungsmittel.

Das Mischungsverhältnis betreffend Struktureinheit a2) kann innerhalb beliebiger Grenzen variieren.

Bevorzugte Copolymere enthalten
2 bis 30 Gew.-%, besonders bevorzugt 3 bis 15 Gew.-%, der Struktureinheiten a1) oder a2), bevorzugt der Struktureinheit a2),
69,5 bis 97,5 Gew.-%, besonders bevorzugt 84,5 bis 96,5 Gew.-%, der Struktureinheit b) und
0,01 bis 5 Gew.-%, besonders bevorzugt 0,2 bis 3 Gew.-%, insbesondere bevorzugt 0,5 bis 2 Gew.-%, der Struktureinheit c).

Besonders bevorzugte Struktureinheiten gemäß Formel (1) leiten sich vom N-Vinylpyrrolidon ab.

Als Struktureinheit gemäß Formel (3) eignet sich bevorzugt die 2-Acrylamido-2-methyl-propan-sulfonsäure, bevorzugt die Ammoniumsalze, besonders bevorzugt das NH₄⁺-Salz.

Die vernetzenden Struktureinheiten c) leiten sich bevorzugt ab von Acryl- oder Methacrylsäureallylester, Trimethylolpropantriacrylat, Trimethylolpropanmethacrylat, Dipropylenglykoldiallylether, Polyglykoldiallylether, Triethylenglykoldivinylether, Hydrochinondiallylether, Tetraallyloxyethan oder anderen Allyl- oder Vinylethern multifunktioneller Alkohole, Tetraethylenglykoldiacrylat, Triallylamin, Trimethylolpropandiallylether, Methylenbisacrylamid und/oder Divinylbenzol. Besonders bevorzugt sind Acrylsäureallylester, Methacrylsäureallylester, Trimethylolpropantriacrylat und/oder Trimethylolpropanmethacrylat.
Insbesondere bevorzugt leiten sich die vernetzenden Strukturen ab von Monomeren der allgemeinen Formel (4) 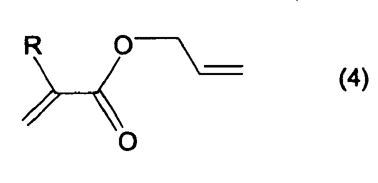 worin R Wasserstoff, Methyl oder Ethyl bedeutet.

Bevorzugt handelt es sich bei den Copolymeren um wasserlösliche oder wasserquellbare Copolymere.

Die Herstellung der Copolymere erfolgt bevorzugt durch radikalische Copolymerisation, bevorzugt durch Fällungspolymerisation, besonders bevorzugt in tert.-Butanol. Bevorzugt werden dabei die Monomeren entsprechend den Formeln (1), (2) und (3) in einem protischen Lösungsmittel gelöst oder dispergiert, anschließend werden zu dieser Lösung oder Dispersion ein oder mehrere Vernetzer c) gegeben und die Polymerisation in bekannter Weise durch Zugabe einer radikalbildenden Verbindung gestartet.
Die Polymerisationsreaktion erfolgt vorzugsweise in einem wasserlöslichen Alkohol oder einem Gemisch mehrerer Alkohole mit 1 bis 6 C-Atomen, vorzugsweise in tert.-Butanol. Der Wassergehalt des Alkohols oder Alkoholgemisches sollte 10 Gew.-% nicht überschreiten, da sonst im Verlauf der Polymerisation eine Klumpenbildung auftreten kann. Die Art und die Menge des Lösungsmittels sollten so gewählt werden, dass das Salz der Acrylamidoalkylsulfonsäure entsprechend Formel (3), insbesondere der 2-Acrylamido-2-methyl-propan-sulfonsäure, darin weitgehend löslich oder dispergierbar ist. Unter weitgehend löslich oder dispergierbar ist zu verstehen, dass sich auch nach Abstellen des Rührwerks kein festes Material aus der Lösung oder Dispersion absetzt. Das im Verlaufe der Reaktion entstehende Polymerisat soll hingegen in dem gewählten Lösungsmittel bzw. Lösungsmittelgemisch weitgehend unlöslich sein. Unter weitgehend unlöslich ist hierbei zu verstehen, dass im Verlauf der Polymerisation eine gut rührbare, breiige Polymerpaste entsteht, in der sich keine Klumpen oder Verklebungen bilden. Das durch Absaugen der Paste erhältliche Filtrat sollte einen Feststoffgehalt von maximal 5 Gew.-% aufweisen. Sind die Copolymere in stärkerem Ausmaß im gewählten Lösungsmittel oder Lösungsmittelgemisch löslich, kann es beim Trocknen der Polymerisatpaste zu Verklumpungen kommen.
Die Polymerisationsreaktion selbst wird in an sich bekannter Weise durch radikalbildende Verbindungen wie Azoinitiatoren (z.B. Azobisisobutyronitril), Peroxide (z.B. Dilaurylperoxid) oder Persulfate im Temperaturintervall von 20 bis 120°C, vorzugsweise zwischen 40 und 80°C, gestartet und über einen Zeitraum von 30 Minuten bis mehrere Stunden fortgeführt.
Das Eigenschaftsprofil der Copolymere lässt sich durch Variation des Mischungsverhältnisses der Monomere sowie dem Anteil an Vernetzer variieren. So kann z.B. durch den verstärkten Einbau von Ammoniumsalzen der Acrylamidosulfonsäuren die verdickende Wirkung der Polymerisate verbessert werden. Durch Einbau von mehr cyclischem N-Vinylcarbonsäureamid wird dagegen die Elektrolytverträglichkeit der Polymerisate und deren Löslichkeit in nicht-wässrigen Systemen verbessert.

Besonders bevorzugt werden als Acrylamidopropylsulfonsäure-Salze die NH₄⁺-Salze einpolymerisiert. Anstelle der Ammoniumsalze kann man auch die freien Acrylamidopropylsulfonsäuren einsetzen und vor der Zugabe der restlichen Monomeren durch Einleiten von Ammoniak die Ammoniumsalze erzeugen.

Die Zubereitungen enthalten bevorzugt 0,1 bis 5 Gew.-%, besonders bevorzugt 0,5 bis 2 Gew.-%, insbesondere bevorzugt 0,7 bis 1.5 Gew.-%, an Copolymeren.

Bei den organischen Lösemitteln handelt es sich um wassermischbare polar aprotische Lösemittel.

Bevorzugt sind einwertige Alkohole, besonders bevorzugt solche ausgewählt aus Methanol, Ethanol, Propanol, Isopropanol, n-Butanol, i-Butanol, t-Butanol, Benzylalkohol, Phenoxyisopropanol, Phenylpropanol, Diacetonalkohol, Oleylalkohol, Ethoxyethanol, Hexylalkohol, Isobutoxypropanol, 4-Methoxybutanol, Methoxyethanol, Methoxyisopropanol, Methoxymethylbutanol, Trimethylhexanol, insbesondere bevorzugt solche mit 1 bis 6 C- Atomen, ganz besonders bevorzugt Methanol, Ethanol, Propanol, Isopropanol, n-Butanol, i-Butanol und t-Butanol.
Bevorzugt sind ferner mehrwertige Alkohole, besonders bevorzugt solche ausgewählt aus der Gruppe Glycerin, Benzolglykol, Butoxydiglykol, Butoxyethanol, Butandiol, Butoxyisopropanol, Butylenglykol, Butyloctanol, Pentylenglykol, Hexandiol, Propylenglykol, Diethylenglykol, Dimethoxydiglykol, Dipropylenglykol, Glykol, 1,2,6-Hexantriol, Isopentyldiol, Methoxydiglykol, Methylpropandiol, Neopentylglykol, Ethoxydiglykol, Ethylhexandiol, Hexylenglykol, ganz besonders bevorzugt Glycerin, Propylenglykol, Butylenglykol und Glykol.

Bevorzugt sind ferner Ketone, Ester, Ether, Amide, Sulfoxide, Nitrile, O-, N- und S-Heterocyclen, bevorzugt Aceton, Methoxyethanolacetate, Triacetin (Glycerintriacetat), Amylacetat, Benzylbenzoat, Benzyllaurat, Butoxyethylacetat, Butylacetat, Butylenglykolpropionat, Butyllactat, Butyloctylbenzoat, Butyloctylsalicylat, Butyrolacton, C5-18 Fettsäuretriglyceride, PEG/PPG Copolymere, Propylacetat, Propylencarbonat, Propylenglykolbutylether, Propylenglycolpropylether, Tetrahydrofurfurylacetat, Tetrahydrofurfurylalkohol, Thiolandiol, Tributylcitrat, Tributylcresylbutan, Acetonitril, THF (Tetrahydrofuran), DMF (Dimethylformamid), DMSO (Dimethylsulfoxid), DBU (Diazabicycloundecan), Pyridin, besonders bevorzugt Aceton, Acetonitril, THF (Tetrahydrofuran) und DMF (Dimethylformamid).

Bevorzugt sind ferner ethoxylierte und/oder propoxylierte Alkohole, besonders bevorzugt ethoxylierte und/oder propoxylierte Alkohole mit 1 bis 20 Mol Ethylenoxid und/oder 1 bis 20 Mol Propylenoxid, insbesondere bevorzugt ethoxylierte und/oder propoxylierte Alkohole ausgewählt aus Polypropylenglycol-7, Polypropylenglycol-10, PPG-2-Buteth-3, PPG-3-Buteth-5, PPG-5-Buteth-7, PPG-7-Buteth-10, PPG-12-Buteth-16, PPG-15-Buteth-20, PPG-20-Buteth-20, PPG-2-Butylether, PPG-3-Butylether, PPG-24-Glycereth-24, PPG-10-Glycerylether, Glycerylether, PPG-2-Methylether, PPG-3-Methylether, PPG-2-Methyletheracetat, PPG-2-Propylether, Propylenglykolbutylether, Propylenglykolpropylether, Methoxy PEG-10, Methoxy PEG-16, Buteth-3, Sorbeth-6 und Sorbeth-20.

Bevorzugt sind ferner Polyethylenglykole, besonders bevorzugt Polyethylenglykole mit einer Molekülmasse kleiner 2000 g/mol, insbesondere bevorzugt Polyethylenglykole mit einer Molekülmasse zwischen 200 bis 600 g/mol.

Mischungen von organischen Lösemitteln können je nach Anwendung vorteilhaft sein und sind damit ausdrücklich im Sinne der Erfindung.

Der Lösemittelanteil der Zubereitungen beträgt, bezogen auf die fertigen Zubereitungen, 5 bis 99,9 Gew.-%.

Überraschenderweise zeigen die Copolymere auch im Bereich hoher Lösemittelgehalte eine sehr gute Verdickerleistung. Zubereitungen mit hohen Gehalten an Lösemittel enthalten bevorzugt 40 bis 95 Gew.-%, besonders bevorzugt 50 bis 85 Gew.-%, an Lösemittel.

Zubereitungen mit niedrigen Gehalten an Lösemittel enthalten bevorzugt 5 bis 30 Gew.-% an Lösemittel. Zubereitungen mit niedrigen Gehalten an Lösemitteln zeigen insbesondere im pH-Bereich 3 bis 6, bevorzugt 3 bis 5, eine hohe Viskositätsstabilität.

Die Zubereitungen können wasserhaltig oder wasserfrei sein. Jedoch ist insbesondere im Falle kosmetischer, dermatologischer und pharmazeutischer Zubereitungen ein Wasseranteil von 30 bis 80 Gew.-%, bezogen auf die fertigen Zubereitungen, vorteilhaft.
Bevorzugt besitzen die Zubereitungen einen pH-Wert im Bereich 3 bis 10, besonders bevorzugt 4 bis 9.

Die Verwendung der Copolymere als Verdicker eignet sich besonders für kosmetische, dermatologische und pharmazeutische Zubereitungen.
Bei den kosmetischen Mitteln kann es sich um rinse-off Produkte, z.B. Shampoos, Duschbäder, Duschgels, Schaumbäder, oder auch leave-on Produkte, z.B. Hautpflegemittel wie Tagescremes, Nachtcremes, Pflegecremes, Nährcremes, Bodylotions, Salben, Sonnenschutzmittel, Lippenpflegemittel und Deodorantien, handeln. Weiterhin kann es sich um tensidfreie wässrig-lösemittelhaltige Mittel und Emulsionen, z.B. Haarkuren und -spülungen, Haargele, Dauerwellenmittel, Haarfärbemittel und dergleichen, handeln.

Die erfindungsgemäßen kosmetischen, dermatologischen und pharmazeutischen Mittel können als weitere Hilfs- und Zusatzstoffe alle üblichen Tenside, Ölkörper, Emulgatoren und Co-Emulgatoren, Überfettungsmittel, Stabilisatoren, biogene Wirkstoffe, Konservierungsmittel, Perlglanzmittel, Farb- und Duftstoffe, Trübungsmittel, weitere Verdickungsmittel und Dispergiermittel, Eiweißderivate, z.B. Gelatine, Collagenhydrolysate, Polypeptide auf natürlicher und synthetischer Basis, Eigelb, Lecithin, Lanolin und Lanolinderivate, Fettalkohole, Silicone, deodorierende Mittel, Stoffe mit keratolytischer und keratoplastischer Wirkung, Enzyme, antimikrobiell wirkende Agentien und Trägersubstanzen enthalten.

Die erfindungsgemäße Verwendung ist jedoch nicht auf kosmetische, dermatologische und pharmazeutische Zubereitungen beschränkt. Vielmehr kann es sich bei den Zubereitungen z.B. auch um Abbeizmittel, Lackentferner, Flugzeugenteiser, Hard Surface Cleaner, Fensterreiniger, Dispersionsfarben, Druckfarben und -pasten handeln.

Ein wesentlicher Vorteil der erfindungsgemäßen Verwendung ist die hohe Viskositätsstabilität der Zubereitungen gegenüber pH-Änderungen. Ein weiterer Vorteil ist die hohe UV-Stabilität der Zubereitungen.

Gegenstand der Erfindung ist auch ein Verfahren zur Verdickung von Zubereitungen, enthaltend 5 bis 99,9 Gew.-% wassermischbare polar aprotische Lösungsmittel, das dadurch gekennzeichnet ist, dass den Zubereitungen mindestens ein Copolymer bestehend im wesentlichen aus
a1) 1 bis 50 Gew.-% der wiederkehrenden Struktureinheit der Formel (1) 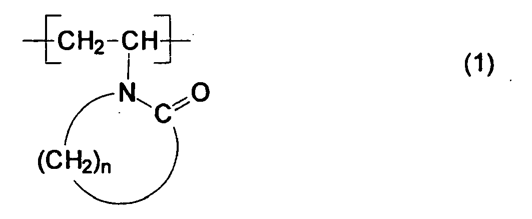 wobei n eine ganze Zahl von 2 bis 9 bedeutet
   oder
a2) 1 bis 50 Gew.-% einer Mischung der wiederkehrenden Struktureinheit der Formel (1) und der wiederkehrenden Struktureinheit der Formel (2) 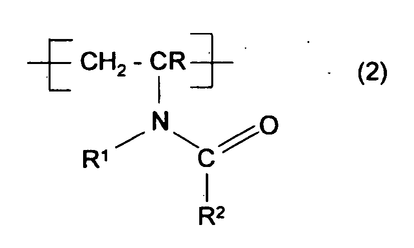 wobei R, R¹ und R² gleich oder verschieden sein können und Wasserstoff oder eine lineare oder verzweigte Alkyl- oder Alkenylgruppe mit jeweils 1 bis 30, bevorzugt 1 bis 20, insbesondere 1 bis 12 C-Atomen, bedeuten
   und
b) 49,99 bis 98,99 Gew.-% der wiederkehrenden Struktureinheit der Formel (3) 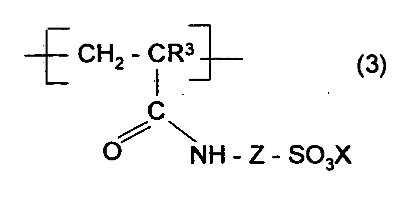 worin R³ Wasserstoff, Methyl oder Ethyl, Z (C₁-C₈)-Alkylen und X ein Ammonium-, Alkali- oder Erdalkali-Ion bedeuten
   und
c) 0,01 bis 8 Gew.-% vernetzenden Strukturen, die aus Monomeren mit mindestens zwei olefinischen Doppelbindungen hervorgegangen sind, zugesetzt wird.

Die nachfolgenden Beispiele sollen die Erfindung näher erläutern, ohne sie jedoch darauf zu beschränken.

### 1) Herstellung der Copolymere:

### Copolymer 1:

In einem 1000 ml Kolben mit Ankerrührer, Rückflusskühler, Innenthermometer, Einleitungsmöglichkeit für N₂ und NH₃ wurden 490,5 g tert. Butanol und 11,5 g Wasser vorgelegt. Anschließend wurden 80,75 g 2-Acrylamido-2-methyl-propan-sulfonsäure eingetragen und unter starkem Rühren dispergiert, wobei eine Trübung des Lösungsmittels erhalten blieb. Über einen Zeitraum von 30 Minuten leitete man 6,64 g Ammoniak in den überstehenden Gasraum ein und rührte mindestens weitere 30 Minuten nach bis sich ein pH-Wert von 6-7 einstellte. Man gab 4,10 g N-Vinylpyrrolidon und 0,8 g Methacrylsäureallylester hinzu und spülte die Vorlage jeweils mit tert. Butanol (ca. 6 ml) nach um Verluste bei der Zugabe zu minimieren. Das Reaktionsgemisch wurde dann auf eine Temperatur von T = 60°C erwärmt, wobei die Reaktionsmischung durch gleichzeitiges Einleiten von N₂ inertisiert wurde. Nach Erreichen der Temperatur von T = 60°C wurden 1,0 g Dilaurylperoxid zugegeben. Die Reaktion sprang unmittelbar nach Zugabe des Initiators an, was an einem Anstieg der Temperatur und am Ausflocken des Polymers zu erkennen war. Etwa 15 Minuten nach dem Einsetzen der Polymerisationsreaktion wurde die Stickstoffzufuhr abgestellt. Ungefähr 30 Minuten nach Zugabe des Dilaurylperoxids erreichte die Temperatur ein Maximum (ca. 65 - 70°C). Weitere 30 Minuten nach Durchlaufen dieses Maximums wurde zum Rückfluss erhitzt und unter diesen Bedingungen zwei Stunden nachgerührt. Der Inhalt des Reaktionsgefäßes nahm im Verlauf der Reaktion eine breiartige Konsistenz an, war aber noch gut rührbar. Anschließend wurde auf Raumtemperatur abgekühlt und der Feststoff abgesaugt.

Die Paste wurde bei 60 - 70°C über 24 Stunden im Vakuumtrockenschrank getrocknet. Man erhielt 92,2 g eines feinen weißen Pulvers.

### Copolymer 2:

Die Reaktionsführung war analog Beispiel 1, jedoch wurden anstelle von Methacrylsäureallylester 1,65 g Trimethylolpropanmethacrylat eingesetzt.

### Copolymer 3:

Die Reaktionsführung war analog Beispiel 1, jedoch wurden als Monomere 35 g 2-Acrylamido-2-methyl-propan-sulfonsäure, 55 g N-Vinylpyrrolidon und 1,9 g Trimethylolpropantriacrylat eingesetzt.

### Copolymer 4:

Die Reaktionsführung war analog Beispiel 1, jedoch wurden als Monomere 77,5 g 2-Acrylamido-2-methyl-propan-sulfonsäure, 8,9 g N-Vinylpyrrolidon, 4,2 g N-Vinylformamid und 1,8 g Trimethylolpropantriacrylat eingesetzt.

### 2) Anwendungen:

Die Tabellen 1, 2 und 3 zeigen die Verdickerleistung der Copolymere in lösemittelhaltigen Zubereitungen. Als Vergleich wurde ein handelsüblicher Verdicker auf Acrylsäure-Basis (Carbopol^{®} 980 der Fa. Goodrich) herangezogen. Zur Viskositätsmessung wurden vom Copolymer 1 und vom Carbopol^{®} 980 wässrige Gele hergestellt, die anschließend durch Zugabe der polar-aprotischen Lösemittel auf die gewünschte Lösemittelkonzentration eingestellt wurden. Der Verdicker-Gehalt betrug immer 1,0 Gew.-%. Die Viskosität wurde bei 20°C mit einem Brookfield Viskosimeter Typ RVT bei 20 Upm gemessen.

**Tabelle 1: Viskositäten [mPas] von 1,0 Gew.-% Copolymer 1 und 1,0 Gew.-% ^{®}Carbopol 980 in Ethanot/E-Wasser und Aceton/E-Wasser Gemischen; pH-Wert 5,5 bis 6**

| Mischungen | Viskositäten [mPas] | Viskositäten [mPas] |
|---|---|---|
| EtOH/E-Wasser | Copolymer 1 | ^{®}Carbopol 980 |
| 0:10 | 50000 | 61 000 |
| 1:9 | 49 000 | 59 000 |
| 2:8 | 48000 | 48000 |
| 3:7 | 46000 | < 100 |
| 4:6 | 41 000 | < 100 |
| 5:5 | 33000 | < 100 |
| 6:4 | 23 500 | < 100 |
| 7:3 | 14 000 | < 100 |
| 8:2 | 5000 | < 100 |

| Aceton/E-Wasser | Copolymer 1 | ^{®}Carbopol 980 |
|---|---|---|
| 0:10 | 50000 | 61 000 |
| 1:9 | 48 300 | 65 500 |
| 2:8 | 46 400 | 66 000 |
| 3:7 | 44 000 | 50 000 |
| 4:6 | 41 000 | < 100 |
| 5:5 | 36 000 | < 100 |
| 6:4 | 27 000 | < 100 |

**Tabelle 2: Viskositäten [mPas] von 1,0 Gew.-% Copolymer 1 und 1,0 Gew.-% ^{®}Carbopol 980 in Ethanol/E-Wasser (1:9) bei verschiedenen pH-Werten**

| pH-Wert | Viskositäten [mPas] | Viskositäten [mPas] |
|---|---|---|
| | Copolymer 1 | ^{®}Carbopol 980 |
| 7,0 | 49000 | 59000 |
| 6,0 | 48000 | 48000 |
| 5,0 | 47000 | 25000 |
| 4,5 | 47500 | 10000 |
| 4,0 | 48000 | < 100 |
| 3,5 | 35000 | < 100 |
| 3,0 | 29000 | < 100 |

**Tabelle 3: Viskositäten [mPas] von 1,0 Gew.-% Copolymer 1 in 1:1 Mischungen verschiedener Lösemittel mit Wasser; pH-Wert 5,5 bis 6**

| Mischung | Viskosität [mPas] | Aussehen |
|---|---|---|
| Propylenglykol/E-Wasser | 55 000 | klare Gele |
| PEG 400/E-Wasser | 18 200 | klare Gele |
| Glykol/E-Wasser | 46 800 | klare Gele |
| Glycerin/E-Wasser | 55 000 | klare Gele |
| Acetonitril/E-Wasser | 23 500 | trübes Gel |
| DMF/E-Wasser | 39 500 | klares Gel |
| DMSO/E-Wasser | 63 500 | trübes Gel |

Man erkennt, dass die Copolymere in lösungsmittelhaltigen Zubereitungen eine hohe Verdickerleistung besitzen. Insbesondere gilt dies im Bereich hoher Lösemittelgehalte. Im Bereich niedrigerer Lösemittelgehalte ist die Verdickerleistung insbesondere im sauren pH-Bereich sehr gut.

## Patentansprüche

1. Verwendung von Copolymeren, bestehend im wesentlichen aus
a1) 1 bis 50 Gew.-% der wiederkehrenden Struktureinheit der Formel (1) 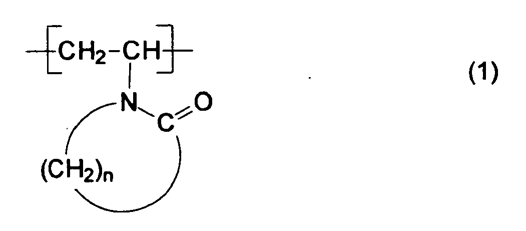 wobei n eine ganze Zahl von 2 bis 9 bedeutet
oder
a2) 1 bis 50 Gew.-% einer Mischung der wiederkehrenden Struktureinheit der Formel (1) und der wiederkehrenden Struktureinheit der Formel (2) 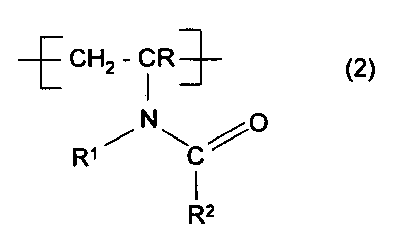 wobei R, R¹ und R² gleich oder verschieden sein können und Wasserstoff oder eine lineare oder verzweigte Alkyl- oder Alkenylgruppe mit jeweils 1 bis 30 C-Atomen, bedeuten und
b) 49,99 bis 98,99 Gew.-% der wiederkehrenden Struktureinheit der Formel (3) 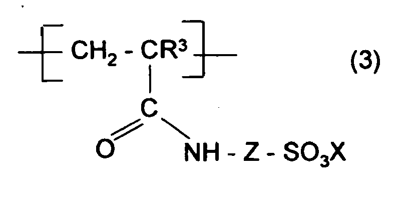 worin R³ Wasserstoff, Methyl oder Ethyl, Z (C₁-C₈)-Alkylen und X ein Ammonium-, Alkali- oder Erdalkali-lon bedeuten
und
c) 0,01 bis 8 Gew.-% vernetzenden Strukturen, die aus Monomeren mit mindestens zwei olefinischen Doppelbindungen hervorgegangen sind,
als Verdicker in Zubereitungen, enthaltend 5 bis 99,9 Gew.-% wassermischbare polar aprotische Lösungsmittel.

2. Verwendung nach Anspruch 1, **dadurch gekennzeichnet, dass** die Copolymere 2 bis 30 Gew.-% der Struktureinheiten a1) oder a2), 69,5 bis 97,5 Gew.-% der Struktureinheit b) und 0,01 bis 5 Gew.-% der Struktureinheit c) enthalten.

3. Verwendung nach Anspruch 1 und/oder 2, **dadurch gekennzeichnet, dass** die Copolymere die Struktureinheit a2) enthalten.

4. Verwendung nach mindestens einem der Ansprüche 1 bis 3, **dadurch gekennzeichnet, dass** sich die Struktureinheit gemäß Formel (1) vom N-Vinylpyrrolidon ableitet.

5. Verwendung nach mindestens einem der Ansprüche 1 bis 4, **dadurch gekennzeichnet, dass** es sich die Struktureinheit gemäß Formel (3) von der 2-Acrylamido-2-methyl-propan-sulfonsäure, bevorzugt den Ammoniumsalzen, besonders bevorzugt dem NH₄⁺-Salz, ableitet.

6. Verwendung nach mindestens einem der Ansprüche 1 bis 5, **dadurch gekennzeichnet, dass** sich die Struktureinheiten c) von Acrylsäureallylester, Methacrylsäureallylester, Trimethylolpropantriacrylat und/oder Trimethylolpropanmethacrylat ableitet.

7. Verwendung nach mindestens einem der Ansprüche 1 bis 6, **dadurch gekennzeichnet, dass** die Copolymere durch Fällungspolymerisation in tert.-Butanol hergestellt werden.

8. Verwendung nach mindestens einem der Ansprüche 1 bis 7, **dadurch gekennzeichnet, dass** die Zubereitungen, bezogen auf die fertigen Zubereitungen, 0,1 bis 5 Gew.-% an Copolymeren enthalten.

9. Verwendung nach Anspruch 1, **dadurch gekennzeichnet, dass** es sich bei den organischen Lösemitteln um einwertige Alkohole, mehrwertige Alkohole, Ketone, Ester, Ether, Amide, Sulfoxide, Nitrile, O-, N- und S-Heterocyclen, ethoxylierte und/oder propoxylierte Alkohole und/oder Polyethylenglykole handelt.

10. Verwendung nach Anspruch 1, **dadurch gekennzeichnet, dass** es sich bei den Lösemitteln um Methanol, Ethanol, Propanol, Isopropanol, n-Butanol, i-Butanol, t-Butanol, Glycerin, Propylenglykol, Butylenglykol, Glykol, Aceton, Acetonitril, Tetrahydrofuran und/oder Dimethylformamid handelt.

11. Verwendung nach Anspruch 1, **dadurch gekennzeichnet, dass** die Zubereitungen, bezogen auf die fertigen Zubereitungen, 40 bis 95 Gew.-% an Lösemitteln enthalten.

12. Verwendung nach Anspruch 1, **dadurch gekennzeichnet, dass** die Zubereitungen, bezogen auf die fertigen Zubereitungen, 5 bis 30 Gew.-% an Lösemitteln, bevorzugt im pH-Bereich 3 bis 6, enthalten.

13. Verwendung nach mindestens einem der Ansprüche 1 bis 12, **dadurch gekennzeichnet, dass** die Zubereitungen, bezogen auf die fertigen Zubereitungen, 30 bis 80 Gew.-% Wasser enthalten.

14. Verwendung nach mindestens einem der Ansprüche 1 bis 13, **dadurch gekennzeichnet, dass** die Zubereitungen einen pH-Wert von 4 bis 9 besitzen.

15. Verwendung nach mindestens einem der Ansprüche 1 bis 14, **dadurch gekennzeichnet, dass** es sich bei den Zubereitungen um kosmetische, dermatologische und pharmazeutische Zubereitungen handelt.

16. Verfahren zur Verdickung von Zubereitungen, enthaltend 5 bis 99,9 Gew.-% wassermischbare polar aprotische Lösungsmittel, **dadurch gekennzeichnet, dass** den Zubereitungen mindestens ein Copolymer bestehend im wesentlichen aus
a1) 1 bis 50 Gew.-% der wiederkehrenden Struktureinheit der Formel (1) 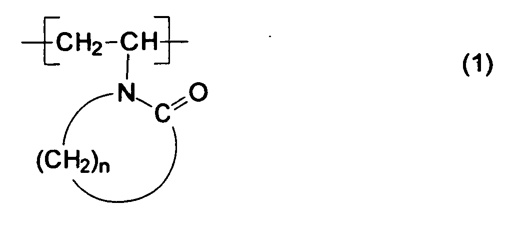 wobei n eine ganze Zahl von 2 bis 9 bedeutet
oder
a2) 1 bis 50 Gew.-% einer Mischung der wiederkehrenden Struktureinheit der Formel (1) und der wiederkehrenden Struktureinheit der Formel (2) 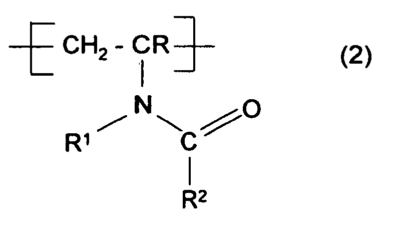 wobei R, R¹ und R² gleich oder verschieden sein können und Wasserstoff oder eine lineare oder verzweigte Alkyl- oder Alkenylgruppe mit jeweils 1 bis 30 C-Atomen bedeuten und
b) 49,99 bis 98,99 Gew.-% der wiederkehrenden Struktureinheit der Formel (3) 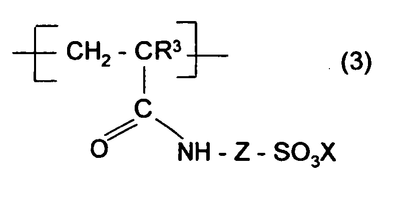 worin R³ Wasserstoff, Methyl oder Ethyl, Z (C₁-C₈)-Alkylen und X ein Ammonium-, Alkali- oder Erdalkali-lon bedeuten und
c) 0,01 bis 8 Gew.-% vernetzenden Strukturen, die aus Monomeren mit mindestens zwei olefinischen Doppelbindungen hervorgegangen sind, zugesetzt wird.

## Claims

1. The use of copolymers, consisting essentially of
a1) 1 to 50% by weight of the repeat structural unit of the formula (1) 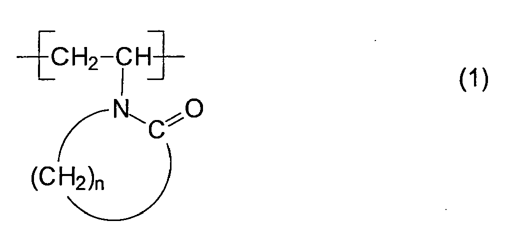 where n is an integer from 2 to 9
or
a2) 1 to 50% by weight of a mixture of the repeat structural unit of the formula (1) and of the repeat structural unit of the formula (2) 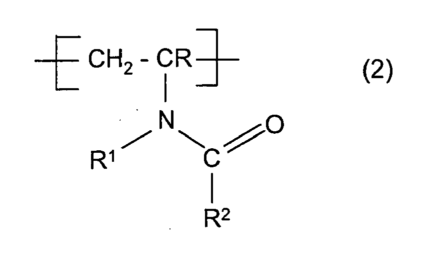 where R, R¹ and R² may be identical or different and are hydrogen or a linear or branched alkyl or alkenyl group having in each case 1 to 30 carbon atoms, and
b) 49.99 to 98.99% by weight of the repeat structural unit of the formula (3) 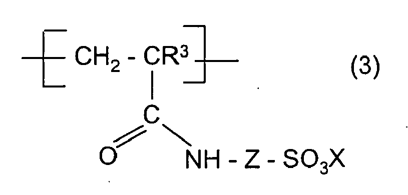 in which R³ is hydrogen, methyl or ethyl, Z is (C₁-C₈)-alkylene and X is an ammonium, alkali metal or alkaline earth metal ion
and
c) 0.01 to 8% by weight of crosslinking structures which originate from monomers having at least two olefinic double bonds, as thickeners in preparations comprising 5 to 99.9% by weight of water-miscible polar-aprotic solvents.

2. The use as claimed in claim 1, wherein the copolymers comprise 2 to 30% by weight of the structural units a1) or a2), 69.5 to 97.5% by weight of the structural unit b) and 0.01 to 5% by weight of the structural unit c).

3. The use as claimed in claim 1 and/or 2, wherein the copolymers comprise the structural unit a2).

4. The use as claimed in at least one of claims 1 to 3, wherein the structural unit according to formula (1) is derived from N-vinylpyrrolidone.

5. The use as claimed in at least one of claims 1 to 4, wherein the structural unit according to formula (3) is derived from 2-acrylamido-2-methylpropanesulfonic acid, preferably the ammonium salts, particularly preferably the NH₄⁺ salt.

6. The use as claimed in at least one of claims 1 to 5, wherein the structural units c) are derived from allyl acrylate, allyl methacrylate, trimethylolpropane triacrylate and/or trimethylolpropane methacrylate.

7. The use as claimed in at least one of claims 1 to 6, wherein the copolymers are prepared by precipitation polymerization in tert-butanol.

8. The use as claimed in at least one of claims 1 to 7, wherein the preparations comprise 0.1 to 5% by weight of copolymers, based on the finished preparations.

9. The use as claimed in claim 1, wherein the organic solvents are monohydric alcohols, polyhydric alcohols, ketones, esters, ethers, amides, sulfoxides, nitriles, 0-, N- and S-heterocycles, ethoxylated and/or propoxylated alcohols and/or polyethylene glycols.

10. The use as claimed in claim 1, wherein the solvents are methanol, ethanol, propanol, isopropanol, n-butanol, isobutanol, t-butanol, glycerol, propylene glycol, butylene glycol, glycol, acetone, acetonitrile, tetrahydrofuran and/or dimethylformamide.

11. The use as claimed in claim 1, wherein the preparations comprise 40 to 95% by weight of solvents, based on the finished preparations.

12. The use as claimed in claim 1, wherein the preparations comprise 5 to 30% by weight of solvents, preferably in the pH range 3 to 6, based on the finished preparations.

13. The use as claimed in at least one of claims 1 to 12, wherein the preparations comprise 30 to 80% by weight of water, based on the finished preparations.

14. The use as claimed in at least one of claims 1 to 13, wherein the preparations have a pH of from 4 to 9.

15. The use as claimed in at least one of claims 1 to 14, wherein the preparations are cosmetic, dermatological and pharmaceutical preparations.

16. A method of thickening preparations comprising 5 to 99.9% by weight of water-miscible polar-aprotic solvents, which comprises adding to the preparations at least one copolymer consisting essentially of
a1) 1 to 50% by weight of the repeat structural unit of the formula (1) 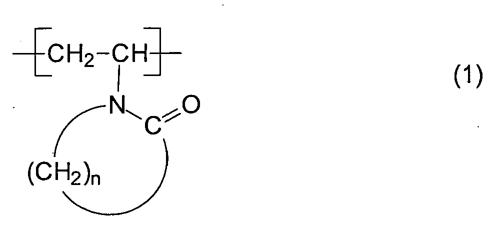 where n is an integer from 2 to 9
or
a2) 1 to 50% by weight of a mixture of the repeat structural unit of the formula (1) and of the repeat structural unit of the formula (2) 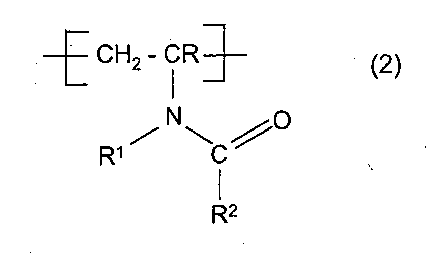 where R, R¹ and R² may be identical or different and are hydrogen or a linear or branched alkyl or alkenyl group having in each case 1 to 30 carbon atoms, and
b) 49.99 to 98.99% by weight of the repeat structural unit of the formula (3) 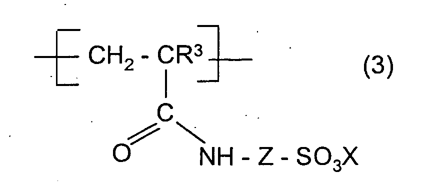 in which R³ is hydrogen, methyl or ethyl, Z is (C₁-C₈) - alkylene and X is an ammonium, alkali metal or alkaline earth metal ion and
c) 0.01 to 8% by weight of crosslinking structures which originate from monomers having at least two olefinic double bonds.

## Revendications

1. Utilisation de copolymères, constitués essentiellement de
a1) 1 à 50 % en poids du motif de structure récurrent de formule (1) 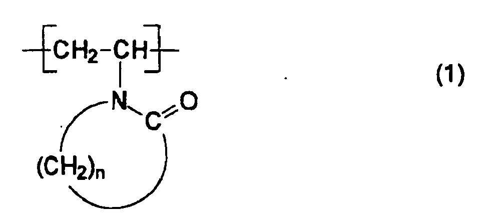 dans laquelle n représente un nombre entier de 2 à 9
ou
a2) 1 à 50 % en poids d'un mélange du motif de structure récurrent de formule (1) et du motif de structure récurrent de formule (2). 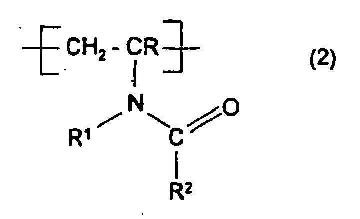 dans laquelle R, R¹ et R² peuvent être identiques ou différents et représentent un hydrogène ou un groupe alkyle ou alcényle linéaire ou ramifié avec respectivement 1 à 30 atomes de carbone et
b) 49,99 à 98,99 % en poids du motif de structure récurrent de formule (3) 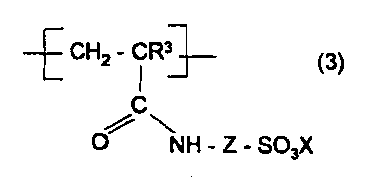 dans laquelle R³ représente un hydrogène, méthyle ou éthyle, Z un alkylène en C₁ à C₈ et X un ion ammonium, alcalin ou alcalino-terreux
et
c) 0,01 à 8 % en poids de structures de réticulation, qui proviennent de monomères avec au moins deux doubles liaisons oléfiniques,
comme épaississant dans des préparations, contenant 5 à 99,9 % en poids de solvant polaire aprotique miscible à l'eau.

2. Utilisation selon la revendication 1, **caractérisée en ce que**, les copolymères contiennent 2 à 30 % en poids des motifs de structure a1) ou a2), 69,5 à 97, 5 % en poids du motif de structure b) et 0,01 à 5 % en poids du motif de structure c).

3. Utilisation selon la revendication 1 et/ou 2, **caractérisée en ce que**, les copolymères contiennent le motif de structure a2).

4. Utilisation selon au moins une des revendications 1 à 3, **caractérisée en ce que**, le motif de structure selon la formule (1) dérive de la N-vinylpyrrolidone.

5. Utilisation selon au moins une des revendications 1 à 4, **caractérisée en ce que**, le motif de structure selon la formule (3) dérive de l'acide 2-acrylamido-2-méthyl-propane-sulfonique, de préférence des sels d'ammonium, de manière particulièrement préférée du sel de NH⁴⁺.

6. Utilisation selon au moins une des revendications 1 à 5, **caractérisée en ce que**, les motifs de structure c) dérivent de l'ester allylique d'acide acrylique, l'ester allylique d'acide méthacrylique, du triacrylate de triméthylolpropane et/ou du méthacrylate de triméthylolpropane.

7. Utilisation selon au moins une des revendications 1 à 6, **caractérisée en ce que** l'on prépare les copolymères par polymérisation par précipitation dans le tert.-butanol.

8. Utilisation selon au moins une des revendications 1 à 7, **caractérisée en ce que**, les préparations, par rapport aux préparations terminées, contiennent 0,1 à 5 % en poids de copolymères.

9. Utilisation selon la revendication 1, **caractérisée en ce qu'**il s'agit pour les solvants organiques d'alcools monohydroxylés, d'alcools polyhydroxylés, de cétones, esters, éthers, amides, sulfoxydes, nitriles, O-, N- et S-hétérocycles, d'alcools éthoxylés et/ou propoxylés et/ou de polyéthylèneglycols.

10. Utilisation selon la revendication 1, **caractérisée en ce qu'**il s'agit pour les solvants du méthanol, éthanol, propanol, isopropanol, n-butanol, i-butanol, t-butanol, glycérol, propylèneglycol, butylèneglycol, glycol, acétone, acétonitrile, tétrahydrofurane et/ou diméthyl-formamide.

11. Utilisation selon la revendication 1, **caractérisée en ce que**, les préparations, par rapport aux préparations terminées, contiennent 40 à 95 % en poids de solvants.

12. Utilisation selon la revendication 1, **caractérisée en ce que**, les préparations, par rapport aux préparations terminées, contiennent 5 à 30 % en poids de solvants, de préférence dans la plage de pH de 3 à 6.

13. Utilisation selon au moins une des revendications 1 à 12, **caractérisée en ce que**, les préparations, par rapport aux préparations terminées, contiennent 30 à 80 % en poids d'eau.

14. Utilisation selon au moins une des revendications 1 à 13, **caractérisée en ce que**, les préparations possèdent une valeur de pH de 4 à 9.

15. Utilisation selon au moins une des revendications 1 à 14, **caractérisée en ce qu'**il s'agit pour les préparations de préparations cosmétiques, dermatologiques et pharmaceutiques.

16. Procédé d'épaississement de préparations, contenant 5 à 99,9 % en poids de solvants aprotiques polaires miscibles à l'eau, **caractérisé en ce que** l'on ajoute aux préparations au moins un copolymère constitué essentiellement de
a1) 1 à 50 % en poids du motif de structure récurrent de formule (1) 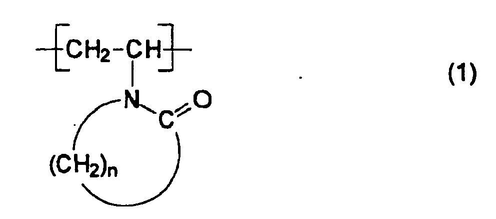 dans laquelle n représente un nombre entier de 2 à 9
ou
a2) 1 à 50 % en poids d'un mélange du motif de structure récurrent de formule (1) et du motif de structure récurrent de formule (2) 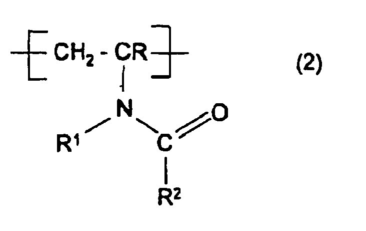 dans laquelle R, R¹ et R² peuvent être identiques ou différents et représentent un hydrogène ou un groupe alkyle ou alcényle linéaire ou ramifié avec respectivement 1 à 30 atomes de carbone et
b) 49,99 à 98,99 % en poids du motif de structure récurrent de formule (3) 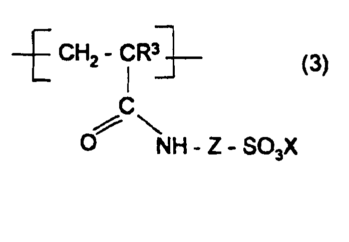 dans laquelle R³ représente un hydrogène, méthyle ou éthyle, Z un alkylène en C₁ à C₈ et X un ion ammonium, alcalin ou alcalino-terreux
et
c) 0,01 à 8 % en poids de structures de réticulation, qui proviennent de monomères avec au moins deux doubles liaisons oléfiniques
